# EUROPEAN PATENT APPLICATION

(11) **EP 4 712 372 A1**
(43) Date of publication of application: **18.03.2026**
(21) Application number: 24199982.0
(22) Date of filing: 12.09.2024
(51) Int. Cl.: H04J 14/02, H04Q 11/00

(54) **WAVELENGTH SELECTION BLOCK FOR A MULTI-PORT OPTICAL DISTRIBUTION BLOCK**

(71) Applicant: Astrape B.V., 5656 AE Eindhoven (NL)
(72) Inventor: Camilli, Marco, 2850 Boom (BE)
(74) Representative: van Dijk, Victor Emmanuel Stephanus

(57) **Abstract**

The invention relates to a wavelength selection block (WSB-2) for a multi-port optical distribution block (PDB-2). The wavelength selection block (WSB-2) comprises: i) an optical input (INP) for receiving an optical fibre (1) carrying a multi-wavelength optical signal (λA) comprising a first number (K) of individual wavelength optical signals (λ1..λK); and ii) a second number (Y) of optical outputs (OUTP-1..OUTP-Y). The wavelength selection block (WSB-2) comprises four consecutive stages (S1..S4). In a first stage the multi-wavelength optical signal (λA) is split into consecutive individual wavelength optical signals (λ1..λK). In a second stage (S2) each individual wavelength optical signal (λ1..λK) is split into a respective group (GR-1..GR-K) of copies of the respective individual wave-length optical signal (λ1..λK), the number of copies equalling the multiplication factor (Y). In a third stage (S3) each copy of each consecutive group (GR-1..GR-K) of copies is individually gated for selectively passing or blocking the respective individual wavelength optical signal (λ1..λK) so as to obtain a respective gated individual wavelength optical signal (λ1g..λKg). In a fourth stage (S4) each consecutive gated individual wavelength optical signal (λ1g..λg) from each consecutive group (GR-1..GR-K) is combined so as to obtain a respective gated multi-wavelength optical signal (λAg), wherein each respective gated multi-wave-length optical signal (λAg) is coupled with a respective optical output (OUTP-1..OUTP-Y). The invention also relates to an optical distribution block (PDB-2) comprising a further number (N) of such wavelength selection blocks (WSB-2).

## Description

### FIELD OF THE INVENTION

The invention relates to a wavelength selection block for a multi-port optical distribution block, wherein the wavelength selection block comprises: i) an optical input for receiving an optical fibre carrying a multi-wavelength optical signal comprising a first number of individual wavelength optical signals multiplexed in the optical fibre in operational use; and ii) a second number of optical outputs, the second number defining a multiplication factor. The invention also relates to an optical distribution block comprising a further number of such wavelength selection blocks. The invention further relates to a smart data switch comprising a plurality of switches and two such optical distribution blocks. The invention also relates to an optical data network comprising a plurality of data network nodes and smart data switch connecting these data network nodes and allowing data communication there between.

### BACKGROUND OF THE INVENTION

Optical data networks typically connect together data centres (both inter-datacentres and intra-datacentres), enterprises, service providers, and residential homes. These networks facilitate communication and the exchange of data between various devices and locations.

Optical data networks are high-speed communication networks that utilize optical fibres to transmit data at incredibly fast speeds, typically measured in gigabits or terabits per second. These networks are the backbone of modern telecommunications infrastructure and are essential for transmitting large amounts of data quickly and efficiently.

The state of the art in optical data networks is constantly evolving, with advancements being made in various areas such as optical components, transmission techniques, and network architectures. Some key developments in the field include the deployment of wavelength division multiplexing (WDM) technology, which allows multiple data streams to be transmitted over a single optical fibre by using different wavelengths of light. This significantly increases the capacity of the network and reduces the need for additional infrastructure.

Another important advancement is the use of coherent optical transmission, which enables higher data rates and longer transmission distances by using advanced signal processing techniques to mitigate signal degradation. This technology has enabled the development of ultra-high-speed networks capable of transmitting data at speeds exceeding 100 gigabits per second.

Overall, the state of the art in optical data networks is focused on increasing capacity, improving efficiency, and enhancing network agility to meet the ever-growing demands of modern data-intensive applications and services.

Optical data networks are known as such. Even though there have been many developments over the last years in the field of optical data networks, there is continuing need to further develop these networks in terms of their efficiency and adaptability to varying demands as far as the ever increasing amount of network traffic is concerned.

In non-prepublished patent application EP24185872.9 the current inventor developed an optical data network comprising smart data switches, which comprises multiple circuit and packet switches. One important component to build these smart data switches are optical distribution blocks for demultiplexing to multiple optical outputs and multiplexing to a single optical output. The performance and costs of these optical distributions blocks was investigated and determined requiring improvement.

### SUMMARY OF THE INVENTION

The invention has for its object to remedy or to reduce at least one of the drawbacks of the prior art, or at least provide a useful alternative to prior art, *particularly increase the yield*/*manufacturability and lower the cost of the optical distribution blocks.*

The object is achieved through features, which are specified in the description below and in the claims that follow.

The invention is defined by the independent patent claims. The dependent claims define advantageous embodiments of the invention.

In a first aspect the invention relates to a wavelength selection block for a multi-port optical distribution block, wherein the wavelength selection block comprises: i) an optical input for receiving an optical fibre carrying a multi-wavelength optical signal comprising a first number of individual wavelength optical signals multiplexed in the optical fibre in operational use; and ii) a second number of optical outputs, the second number defining a multiplication factor. The wavelength selection block comprises four consecutive stages between the optical input and the second number of optical outputs. The wavelength selection block is characterized in that a first stage of the four consecutive stages is directly coupled with the optical input and comprises wavelength splitter having multiple wavelength outputs, the wavelength splitter being configured for splitting the multi-wavelength optical signal on the optical input into consecutive individual wavelength optical signals distributed over the wavelength outputs. The wavelength selection block is further characterized in that a second stage of the four consecutive stages is coupled with the wavelength outputs of the wavelength splitter and comprises one optical splitter per wavelength output, each optical splitter having a splitter input and a plurality of splitter outputs, each consecutive splitter creating a consecutive group of copies of each respective individual wavelength optical signal on its respective plurality of splitter outputs, a number of splitter outputs per optical splitter equalling the multiplication factor. The wavelength selection block is further characterized in that a third stage of the four consecutive stages is coupled with the splitter outputs of the second stage and comprises a third number of optical gates having a gate input and a gate output, the third number being the first number multiplied by the second number, wherein each copy of each consecutive group of copies is individually gated by a respective optical gate that is configured for selectively passing or blocking the respective individual wavelength optical signal on the respective gate input so as to obtain a respective gated individual wavelength optical signal on the respective gate output. The wavelength selection block is further characterized in that a fourth stage of the four consecutive stages is coupled with the gate outputs of the optical gates of the third stage and comprises a further plurality of optical combiners, each optical combiner having a number of optical combiner inputs equal to the first number and one optical combiner output, wherein each consecutive optical combiner input of each consecutive optical combiner receives a consecutive gated individual wavelength optical signal from each consecutive group so as to obtain a respective gated multi-wavelength optical signal on each optical combiner output. This gated multi-wavelength optical signal may also be amplified in embodiments of the invention. Moreover, each optical combiner outputs is coupled with a respective optical output.

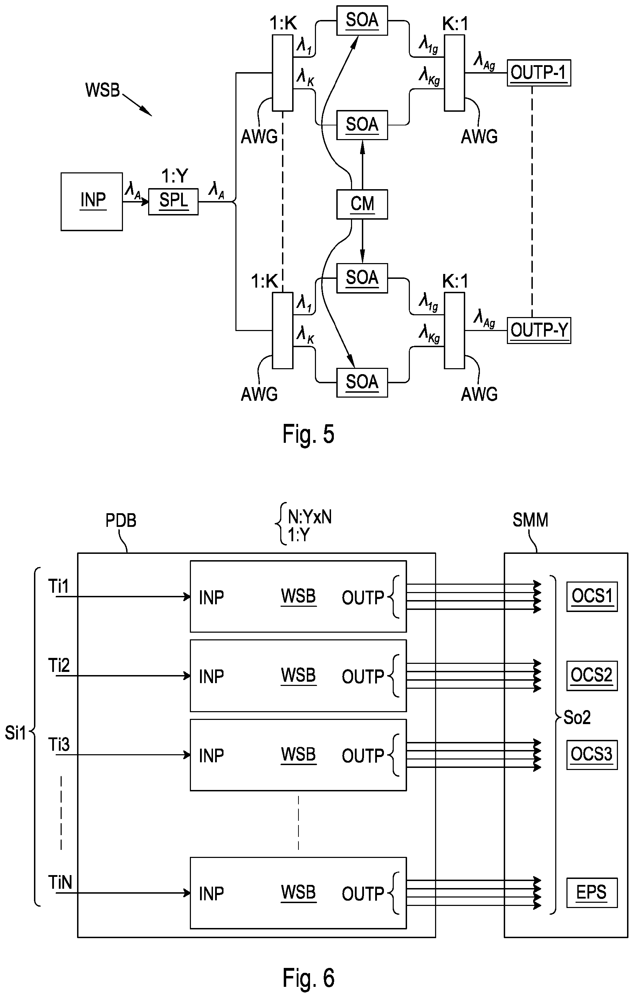

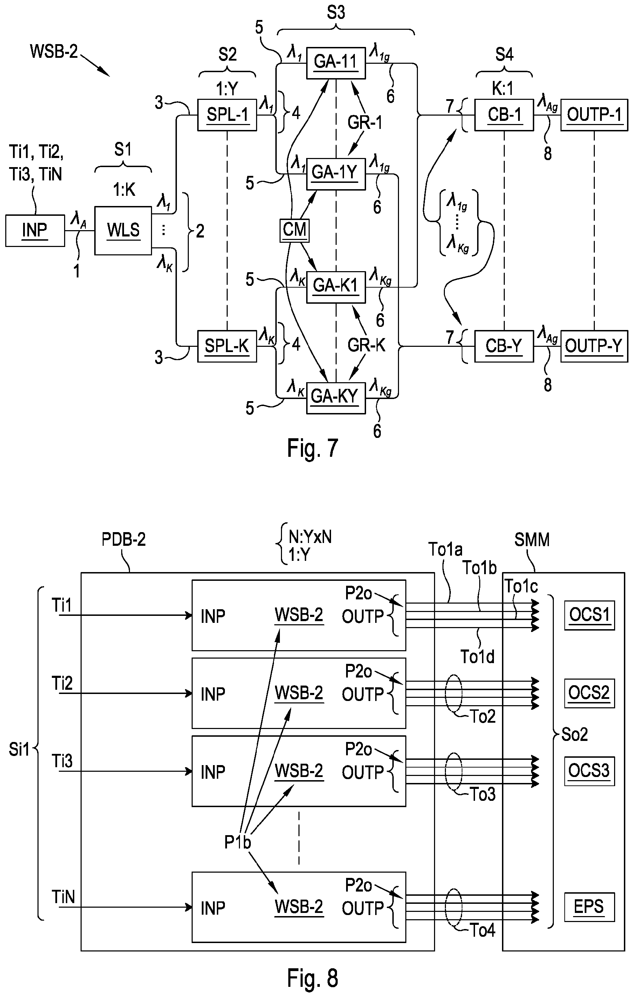

The effects of the features of the wavelength selection block in accordance with the invention are as follows. First of all, the wavelength splitting is performed in the first stage right after the input. Then, the obtained individual wavelength optical signals are copied into group and individually gated and optionally amplified. Then in the last stage, there are provided the optical combiners which combine one of each available gated individual wavelength optical signal from each group thereby creating gated/manipulated/controlled multi-wavelength optical signals again on the plurality of outputs, which gated/manipulated/controlled multiwavelength optical signals are, as such, similar to what is obtained with the known wavelength selection blocks. However, the invention requires only have of the wavelength splitting blocks than the best prior art solution. The impact of this difference is large in terms of manufacturability and costs. The wavelength splitting blocks are typically arrayed waveguide gratings (AWG's), which are large blocks in terms of physical size/layout when integrated in Silicon Photonics or Indium Phosphite. Instead of the extra wavelength splitting block (i.e. AWG), multiple combiners are to be added, but these are less costly and bulky in terms of manufacturability. In addition, there are more crossings between the third and fourth stage. This is further explained in detail with reference to Figs. 5 and 7.

To facilitate understanding of the invention one or more expressions are further defined hereinafter.

Whenever the wording "multi-wavelength optical signal" is used, this must be interpreted as an optical signal comprising multiple sub-signals multiplexed in the frequency domain, wherein each sub-signal used a different wavelength.

Whenever the wording "individual wavelength optical signal" is used, this must be interpreted as an optical signal comprising only one sub-signal that is substantially associated with one wavelength.

Whenever the wording "stage" is used, this must be interpreted as a level of hierarchy in an (optical) circuit, the first stage being the first layer of components seen at the input side, and each subsequent/consecutive stage being the next hierarchical layer in the (optical) circuit.

Wherever the wording "optical data network" is used, this must be interpreted as a data network that is mainly build up out of a plurality of data network nodes connected by switches and substantially optical data connections, such as optical fibre connections and optical waveguides. There may be local electrical connections as well, but it is the optical domain that is dominant.

Wherever the wording "data network node" is used, this must be interpreted as an entity connected to the data network, which either generates data to be communicated over the data network and/or receives such data from the data network. Examples of data network nodes are a server, a supercomputer, a switch (both smart and legacy) including a Top-of-Rack (TOR) or a leaf and spine switch.

Wherever the wording "data" is used, this must be interpreted as the information that is transmitted over the data network, such information typically being embodied in data packets.

Wherever the wording "communication protocol" is used, this must be interpreted as the protocol data is used to communicate data over the data network, such as the Transmission Control Protocol (TCP), Internet Protocol (IP), User Datagram Protocol (UDP), Internet Control Message Protocol (ICMP), Ethernet, and InfiniBand. It must be noted that data packets often have multiple layers, wherein each layer has its own communication protocol. For example, a TCP segment is embedded in an IP packet that is embedded in an Ethernet frame.

Wherever the wording "data packet" is used, this must be interpreted as a quantity of data that is packaged, which as a whole may be communicated over a data network in accordance with a predefined communication protocol or a set of predefined communication protocols. Typically, a data packet comprises a header and payload to be communicated, wherein the data itself may comprise another header in accordance with another communication protocol together with its payload. The header of a TCP segment comprises fields for: source port, destination port, sequence number, acknowledgement number, reserved functions, data offset, flags, window, checksum, urgent pointer, options, padding. The data or payload, being variable in size, is embedded by the header. The header of an IP packet comprises fields for: Version, IHL, Type-of-Service, total length, identification, flags, fragmentation offset, time-to-live, protocol, header checksum, source address, destination address, options (+padding). The data, being variable in size, follows the header.

The header of a ICMP packet is typically 8-bytes and comprises fields for: type, code, checksum, rest of header. The data, being variable in size, follows the header.

Wherever the wording "network interface" is used, this must be interpreted as the part of the network node that is configured for allowing communication with the data network. It may be implemented in dedicated hardware (such as a PCIE-card to be inserted in a PCIE-slot or a full-custom piece of hardware), but could also be implemented in software running on a processor/controller, or even as a combination of both.

Wherever the wording "data connection network" is used, this must be interpreted as the part of the data network connecting the different network nodes together, including the optical connections, the data switches, and maybe some local electrical connections.

Wherever the wording "data switch" is used, this must be interpreted as the components in the data network that dynamically establishes data links between the network nodes that are communication or supposed to communicate with each other.

Whenever the wording "optical connection" is used, this must be interpreted as a connection over which optical signals are transmitted. Example of such optical connections are glass fibre (single mode fibre, multimode fibre, polarization maintaining fibre) and optical waveguides.

Wherever the wording "data link" is used, this must be interpreted as an established data connection between two network nodes over which data can be, has been or will be communicated.

Wherever the wording "smart data switch" is used, this must be interpreted as a data switch with extra built-in functionality, beyond the functionality of a conventional data switch, in line with the data switch presented in this specification.

Wherever the wording "data classifier" is used, this must be interpreted as a part of the network interface that is configured for classifying data packets in accordance with the current invention. The functionality of the data classifier goes beyond the conventional network interfaces that are known from the prior art. The data classifier by be implemented in hardware, in software or a combination of both.

Wherever the wording "traffic classes" is used, this must be interpreted as classes of data packets defined by their destination in the smart data switch. As the current specification will illustrate, there are many ways to classify the data packets to achieve the desired advantage of the current invention.

Wherever the wording "packet switch" is used, this must be interpreted as a data switch that is capable of analysing the data packet and establishing the data links based on the analysis of the data packet. An example of such packet switch is an electronic packet switch.

Wherever the wording "circuit switch" is used, this must be interpreted as a data switch that is not able of analysing the data packet, but establishes the data links under control of a controller that determines the destination of the data packet.

In an embodiment of the wavelength selection block in accordance with the invention each optical gate is further configured for performing amplification of the respective gated individual wavelength optical signal. The combiners may result in additional losses in optical signal strength. The current embodiment compensates for these losses by using the optical gates (which may typically be semiconductor optical amplifiers, i.e., SOA's) also for performing amplification of the signals.

In an embodiment of the wavelength selection block in accordance with the invention the first number is equal to the second number, which implies the number of optical outputs being equal to the number of individual wavelength optical signals in the multi-wavelength optical signal on the optical input in operational use. The advantage of this embodiment is that each individual wavelength optical signal can be individually (so without the other individual wavelength signals) sent to each optical output whenever required. This is the most efficient use of the different individual wavelength optical signals present in the multi-wavelength optical signal on the optical input.

In an embodiment of the wavelength selection block in accordance with the invention the first number is larger than the second number), which implies the number of optical outputs being smaller than the number of individual wavelength optical signals in the multi-wavelength optical signal on the optical input in operational use. The advantage of this embodiment is that required hardware is saved as there will be less and smaller optical components required to build the functionality. However, a possible disadvantage is that one or more individual wavelength optical signals need to be multiplexed on one or more of the optical outputs.

In a second aspect the invention relates to an optical distribution block comprising a further number of wavelength selection blocks according to the invention. Each optical input is coupled with a respective optical input line of the optical distribution block, and each optical output is coupled with a respective optical output line of the optical distribution block. By placing multiple wavelength selection blocks of the invention in parallel an optical distribution block is formed, wherein the further number determines the amount of (optical) switches that may be connected to the distribution block.

In an embodiment of the optical distribution block in accordance with the invention the first number of wavelength outputs of the wavelength splitter equals the number of optical splitters, which equals the number of groups of copies, which equals the number of combiner inputs, wherein the first number is an integer larger than or equal to two.

In an embodiment of the optical distribution block in accordance with the invention the second number of optical outputs of the wavelength selection block equals the number of splitter outputs, which equals the number of copies in each group, which equals the number of optical combiners, wherein the second number is an integer larger than or equal to two.

In an embodiment of the optical distribution block in accordance with the invention the further number of wavelength selection blocks in the optical distribution block equals the number of switches in the smart switch, wherein the further number is an integer larger than or equal to two. In the last mentioned three embodiments, there is a special group of embodiments wherein the first number, the second number and the further number are all equal, for instance four, eight or sixteen. Preferably these numbers are a multiple of two, but that is not required. Also, in view of an earlier-mentioned embodiment of the wavelength selection block, there is a further group of embodiments where the first number is larger than the second number, meaning that one or more individual wavelength optical signals need to be multiplexed on one or more of the optical outputs. This saves hardware.

In a third aspect the invention relates to a smart data switch comprising a plurality of switches, and two optical distribution blocks according to the invention, wherein the first optical distribution block is placed on an input side of the smart data switch for demultiplexing incoming multi-wavelength signals on a plurality of its inputs into demultiplexed signals on its outputs for being sent to the plurality of switches, wherein the second optical distribution block is placed on an output side of the smart data switch for multiplexing demultiplexed signals on its inputs that are received from the plurality of switches into multiplexed multi-wavelength signals on its outputs. The wavelength selection block and the optical distribution block according to the invention have a significant impact on the smart data switch as presented in non-prepublished patent application EP24185872.9, the cost of which becoming significantly lower and the manufacturability significantly better.

In a fourth aspect the invention relates to an optical data network comprising a plurality of data network nodes and smart data switch according to the invention, the smart data switch connecting these data network nodes and allowing data communication there between. Smart data switch according to the invention has a significant impact on the optical data network as presented in non-prepublished patent application EP24185872.9, the cost of which becoming significantly lower.

In a fifth aspect the invention relates to a wavelength selection block for a multi-port optical distribution block. The wavelength selection block comprises:
- an optical input for receiving an optical fibre carrying a multi-wavelength optical signal comprising a first number of individual wavelength optical signals multiplexed in the optical fibre in operational use; and
- a second number of optical outputs, the second number defining a multiplication factor;

wherein, the wavelength selection block comprises four consecutive stages between the optical input and the second number of optical outputs,
wherein in a first stage the multi-wavelength optical signal is split into consecutive individual wavelength optical signals,
wherein in a second stage each individual wavelength optical signal is split into a respective group of copies of the respective individual wavelength optical signal, the number of copies equalling the multiplication factor,
wherein in a third stage each copy of each consecutive group of copies is individually gated for selectively passing or blocking the respective individual wavelength optical signal so as to obtain a respective gated individual wavelength optical signal,
wherein in a fourth stage each consecutive gated individual wavelength optical signal from each consecutive group is combined so as to obtain a respective gated multi-wavelength optical signal,
wherein each respective gated multi-wavelength optical signal is coupled with a respective optical output.

The effects of the features of the wavelength selection block in accordance with the fifth aspect of invention are as follows. First of all, the wavelength splitting is performed in the first stage right after the input. Then, the obtained individual wavelength optical signals are copied into group and individually gated and optionally amplified. Then in the last stage, there are provided the optical combiners which combine one of each available gated individual wavelength optical signal from each group thereby creating gated/manipulated/controlled multiwavelength optical signals again on the plurality of outputs, which gated/manipulated/controlled multiwavelength optical signals are, as such, similar to what is obtained with the known wavelength selection blocks. However, the invention requires only have of the wavelength splitting blocks than the best prior art solution. The impact of this difference is large in terms of manufacturability and costs. The wavelength splitting blocks are typically arrayed waveguide gratings (AWG's), which are large blocks in terms of physical size/layout when integrated in Silicon Photonics or Indium Phosphite. Instead of the extra wavelength splitting block (i.e. AWG), multiple combiners are to be added, but these are less costly and bulky in terms of manufacturability. In addition, there are more crossings between the third and fourth stage. This is further explained in detail with reference to Figs. 5 and 7.

The wavelength selection block in accordance with the fifth aspect has the same embodiments as the wavelength selection block in accordance with the first aspect. Furthermore, the invention relates to optical distribution block according to claim 4 comprising a plurality of such wavelength selection blocks, to a smart data switch according to claim 9 comprising such optical distribution blocks, and to an optical data network according to claim 10 comprising such smart data switch.

### BRIEF INTRODUCTION OF THE DRAWINGS

In the following is described example of preferred embodiments illustrated in the accompanying drawings, wherein:
Fig. 1 shows an optical data network as previously developed;
Fig. 2 shows further aspects of the optical data network of Fig. 1;
Fig. 3 shows further implementation aspects of the smart data switch of Fig. 1;
Fig. 4 shows a reconfigurable optical add-drop multiplexer (ROADM) as known from the prior art;
Fig. 5 shows a wavelength selection block used in Fig. 4;
Fig. 6 shows an optical distribution block comprising a plurality of wavelength selection blocks as shown in Fig. 5;
Fig. 7 shows a generic embodiment of wavelength selection block in accordance with the invention; and
Fig. 8 shows an optical distribution block comprising a plurality of wavelength selection blocks as shown in Fig. 7.

### DETAILED DESCRIPTION OF THE EMBODIMENTS

Various illustrative embodiments of the present subject matter are described below. In the interest of clarity, not all features of an actual implementation are described in this specification. It will of course be appreciated that in the development of any such actual embodiment, numerous implementation-specific decisions must be made to achieve the developers' specific goals, such as compliance with system-related and business-related constraints, which will vary from one implementation to another. Moreover, it will be appreciated that such a development effort might be complex and time-consuming but would nevertheless be a routine undertaking for those of ordinary skill in the art having the benefit of this disclosure.

The present subject matter will now be described with reference to the attached figures. Various systems, structures and devices are schematically depicted in the drawings for purposes of explanation only and to not obscure the present disclosure with details that are well known to those skilled in the art. Nevertheless, the attached drawings are included to describe and explain illustrative examples of the present disclosure. The words and phrases used herein should be understood and interpreted to have a meaning consistent with the understanding of those words and phrases by those skilled in the relevant art. No special definition of a term or phrase, i.e., a definition that is different from the ordinary and customary meaning as understood by those skilled in the art, is intended to be implied by consistent usage of the term or phrase herein. To the extent that a term or phrase is intended to have a special meaning, i.e., a meaning other than that understood by skilled artisans, such a special definition will be expressly set forth in the specification in a definitional manner that directly and unequivocally provides the special definition for the term or phrase.

The invention introduces an advanced optical distribution block (build up out of a plurality of wavelength selection blocks that are controlled by a control module or control plane) that employs optical amplifiers, such as Semiconductor Optical Amplifiers (SOAs), for dynamic light channel manipulation. With the use of an Arrayed Waveguide Grating (AWG), the distribution efficiently splits incoming light into individual wavelengths. These wavelengths are then processed through a matrix of optical amplifiers (SOAs), which grants the unique capability to independently route each wavelength to designated outputs. The optical amplifiers main function is that of an optical gate, which is passing or blocking respective optical signals. The optical distribution block of the invention also allows for the merging of multiple wavelengths into a single output and the simultaneous distribution of one wavelength to various outputs. This level of flexibility ensures that the invention can support complex and varied routing demands, making it an essential component for the next generation of optical data networking infrastructures that require adaptable bandwidth and enhanced data transport efficiency.

In modern Wavelength Division Multiplexing (WDM) networks where multiple wavelengths, or colours of light, carry various data streams through a single fibre optic cable a Reconfigurable Optical Add-Drop Multiplexer (ROADM) is an essential component. A ROADM is a device in fibre-optic networks that allows for more versatile management of the wavelength channels that make up the data signals transmitted over optical fibres.

The key function of a ROADM is to add, block, pass, or redirect specific wavelengths of light with high precision and without affecting the other channels. This is crucial in large networks where data needs to be directed to different paths without interrupting the continuous flow of other signals.

The "reconfigurable" part in the name means that the device can dynamically adjust to changing traffic patterns. It does not require manual intervention to change the configuration. Instead, it can be controlled remotely as network demands shift. This flexibility is essential for adapting to varying data loads and for network recovery in case of a fault.

A ROADM can be composed of various technologies, such as liquid crystal on silicon (LCoS), planar lightwave circuits (PLC), wavelength-selective switches (WSS), and tuneable filters, all aiming to provide seamless channel management. The advancement of ROADMs has significantly contributed to the efficiency and scalability of optical networks, enabling rapid growth in the capacity and complexity of communications infrastructure.

In essence, ROADMs act as smart traffic controllers for light, directing the flow of data-carrying wavelengths in optical networks, ensuring efficient use of resources, and facilitating high-speed internet and communications services.

The optical distribution block current invention provides, by using SOAs (or similar components), similar advantages as a ROADM, particularly in terms of routing flexibility and the dynamic handling of wavelength channels. However, the critical distinction with the ROADM is in how the device can independently amplify and route each wavelength, offering more granular control compared to traditional ROADMs, offering unique capabilities for merging and distributing wavelengths that are not inherently available in standard ROADM designs.

The background of the invention and the embodiments of the invention will be discussed with reference to the figures hereinafter.

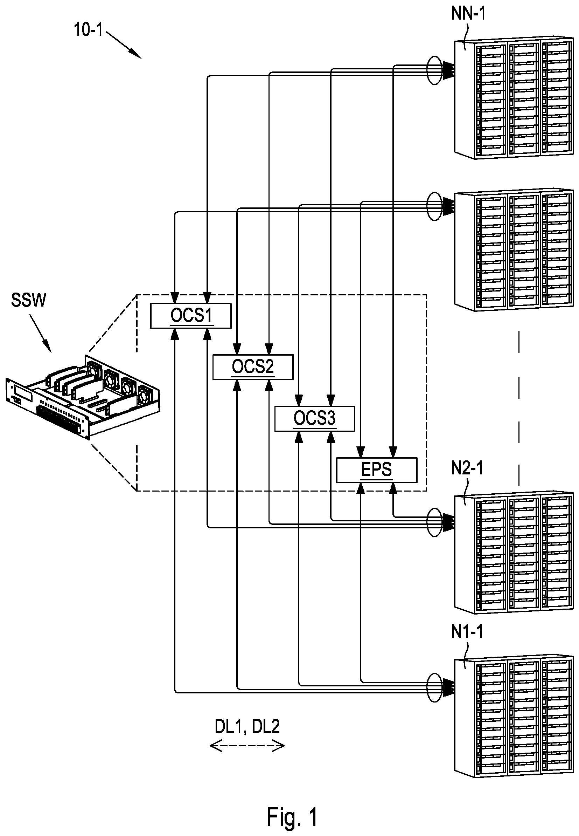

Fig. 1 shows an optical data network 10-1 as previously developed and disclosed in non-prepublished patent application EP24185872.9. The respective network nodes N1-1, N2-1, NN-1 in Fig. 1 are top-of-racks (TOR's) of server racks or servers, in this embodiment. In this embodiment the smart data switch SSW comprises three optical circuit switches OCS1, OCS2, OCS3 and one electronic packet switch EPS as illustrated. The heart of the optical data network 10-1 of the invention lies in the fast switching circuit switch (preferably a fully-optical switch), which establishes itself as the cornerstone for high-velocity data transit routes. This device can be configured to operate either as a broadband or a selective wavelength switch, deftly catering to the diverse demands of elephant traffic. Crafted for the expeditious and efficient relay of large data sets, the optical switch enables quick data transfers, sidestepping the typical bottlenecks inherent to electronic switches.

Fig. 1 can be generalized to multiple lines handled by different optical switches and electronic switches.

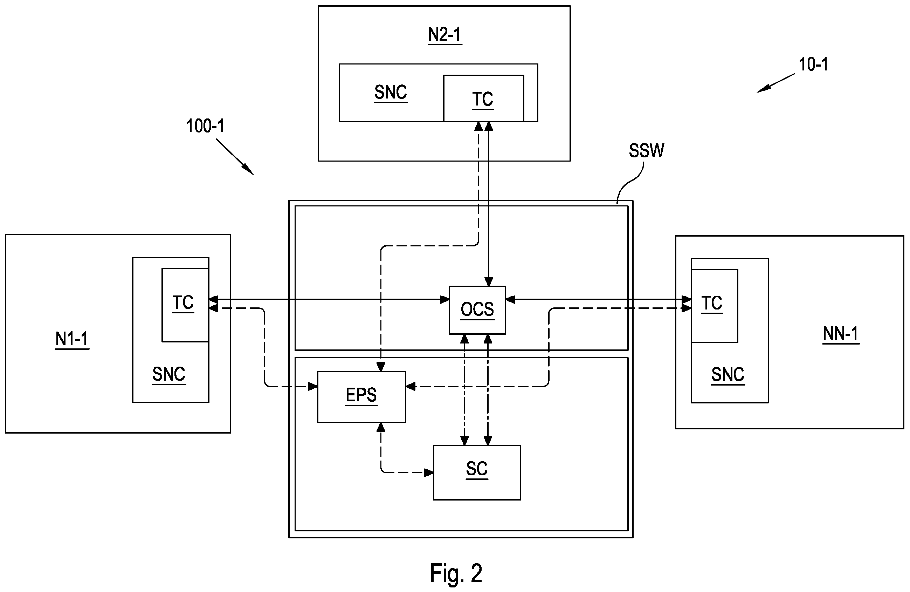

Fig. 2 shows further aspects of the optical data network 10-1 of Fig. 1, particularly relates to the switch controller SC. The switch controller SC with dual functionality is the operational epicentre, directing the internal control plane. This dual-purpose controller governs the electronic path as an electronic switch, adept at managing the dynamic and frequent small data packets of mouse traffic, while concurrently ensuring a smooth integration and transition between the optical switch and its electronic counterpart. This versatility guarantees an effective data throughput, regardless of the traffic type.

At the network nodes N1-1, N2-1, NN-1, be servers, ToRs, or other apparatuses. The smart network interface cards SNC are key. These cards SNC interface with both the optical and electronic paths. Through the utilization of control messages configuring the data classifiers which discern the traffic, the smart network interface cards SNC discern the most optimal path for packet delivery, channelling data via the optical or electronic switch, predicated on packet size and priority. This intelligent routing takes place at the NIC level, dictated by the configurations from the switch controller SC, elevating the network's efficiency and adaptability. Each network interface card SNC comprises a transceiver module TC (QFSP or OSFP) for allowing communication with the optical data network 10-1.

In unison, optical data network of Figs. 1 and 2 manages of both mouse and elephant traffic, surmounting the shortcomings of extant network technologies. The amalgamation of the Fast Switching Optical Switch's prowess in high-volume data transmission, the Switch Controller's skill in small packet oversight, and the Smart NICs' adeptness in dynamic routing yields an architecture of superior efficiency and responsiveness to the varied exigencies of network traffic. More information on how the different traffic classes are determined is described in disclosed in non-prepublished patent application EP24185872.9.

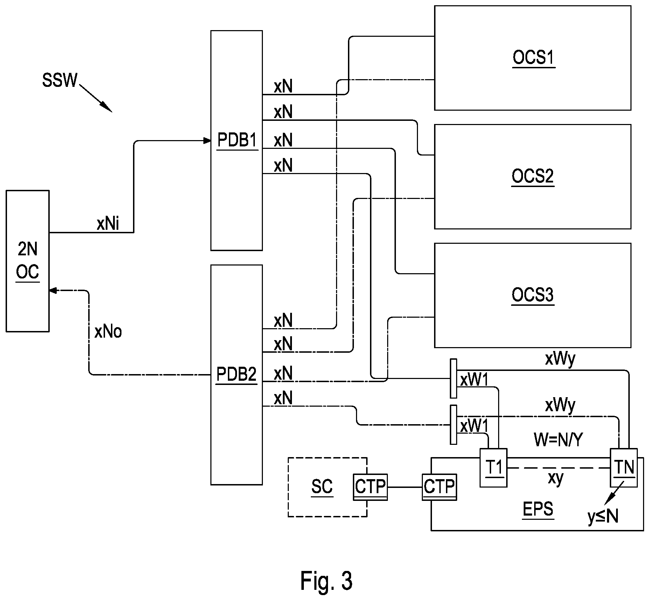

Fig. 3 shows further implementation aspects of the smart data switch SSW of Fig. 1 as previously developed and disclosed in non-prepublished patent application EP24185872.9. The smart data switch SSW is designed to harness the strengths of both optical and electronic switching to heighten efficiency and diminish power consumption.

Fig. 3 lays out a generic smart data switch SSW, illustrating the integral components that form its structure. On the left of the figure, it starts with the external ports OC, which are fibre connectors (optical links) and comprise N inputs xNi and N outputs xNo. This may vary depending on the chosen technology. For single fibres utilizing Wavelength Division Multiplexing (WDM), the typical connector is the dual LC connector, which employs separate fibres for transmission (TX) and reception (RX). For simplicity in the diagram, TX fibres are depicted heading to the right and RX fibres to the left, with the notation 'xN' signifying paths for N independent fibres.

Following the TX path, we encounter a first optical distribution block PDB1, the initial routing station that separates various input wavelengths, channelling them to distinct switches (i.e., it acts as a demultiplexer). This versatile component can be implemented using different technologies and is also capable of recombining signals when needed. In a basic setup, an Arrayed Waveguide Grating (AWG) might be used to filter and demultiplex wavelengths-in the diagram's case, four. The number of wavelengths handled correlates with the transceiver type utilized. More information on an implementation in accordance with the prior art is presented with reference to Figs. 5 and 6.

Exiting the first optical distribution block PDB1 are 4xN fibres corresponding to the number of utilized wavelengths (in this example), which then connect to their respective circuit switch OCS1, OCS2, OCS3 or package switch EPS. For an optical circuit switch, each input fibre can be real-time linked to one or several output fibres, wherein various technologies (MEMS, InP, SiPh) are possible. Therefore, the current invention is independent from specific technological constraints. The output fibres proceed to a second optical distribution block PDB2 as illustrated, which recombines the wavelengths and connects the composite fibre back to the RX side of the external ports xNo. A simple combiner may be used to implement this component.

Contrastingly, when utilizing an electronic packet switch ESP, which cannot operate purely within the optical domain, the fibres are coupled with transceivers T1..TN either as pluggable units similar to those found in NICs or integrated within the electronic packet switch ESP, wherein the data is managed through a standard electronic packet switch process.

It's vital to emphasize that the electronic packet switch ESP is also connected to the switch controller SC via respective control ports CTP. This connection forms the control plane, which responds to requests from the NIC and manages the optical circuit switches OCS, as will discussed later. Depending on the traffic requirements, multiple electronic packet switches ESP may be deployed.

In summary, this diagram offers a high-level view of the smart data switch's architecture, demonstrating how it amalgamates optical and electronic components to forge a path toward more efficient and power-conscious network switching.

The rectangles without reference signs in Fig. 3 do not indicate components, but rather illustrate that the fibres getting aggregated differently when routed to the transceivers T1..TN.

The inventor realized that several improvements on the design of the optical distribution blocks PDB1, PDB2 are possible as these blocks are bulky, difficult to manufacture with high yield and therewith costly.

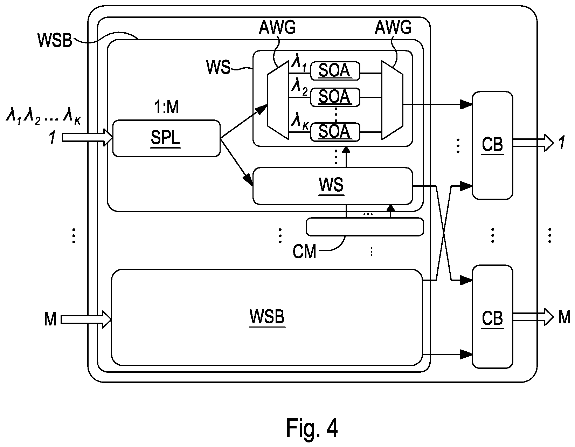

Fig. 4 shows a reconfigurable optical add-drop multiplexer (ROADM) as known from the prior art. Such ROADM has been reported in the following invited paper:
Nicola Calabretta et. al. "Photonic Integrated WDM Cross-Connects for Telecom and Datacom Networks", the 23rd OptoElectronics and Communications Conference (OECC 2018) Technical Digest, July 02-06, 2018, Jeju, Korea.

The ROADM in Fig. 4 comprises of a plurality of wavelength selection blocks WSB (referred to as "optical module" in the article. In the current example there are M inputs and M outputs, each input having a multi-wavelength optical signal comprising a plurality of individual wavelength optical signals λ1,λ2..λK as illustrated. Each wavelength selection block WSB has the same structure, wherein the respective input is first fed into an optical splitter SPL, also being referred to as a wavelength splitter in the prior art. The optical splitter SPL makes M copies of the multi-wavelength optical signal. Each signal being fed into a respective wavelength selector WS as illustrated. Each wavelength selector WS comprises a first stage having an arrayed waveguide grating AWG which splits the multi-wavelength optical signal on its input into individual wavelength signals λ1,λ2..λK. In a second stage each individual wavelength signal λ1,λ2..λK is gated, i.e. blocked or passed, by a respective semiconductor optical amplifier SOA as illustrated. Each semiconductor optical amplifier SOA of each wavelength selector WS of each wavelength selection block WSB is controlled by a control module CM as illustrated. The control module CM which is part of the control plane of the ROADM. The gated signals are subsequently multiplexed into a single multi-wavelength optical signal by a further arrayed waveguide grating AWG, as illustrated. In order to complete the ROADM functionality and reduce the number of outputs again to M there is provided a further stage comprising a plurality of optical combiners CB that each are fed with one of each output of each wavelength selector WS, as illustrated. For more information on how the ROADM of Fig. 4 works reference is made to the earlier-mentioned article, which is herewith incorporated by reference its entirety.

Fig. 5 shows a wavelength selection block WSB used in Fig. 4. Thus, this excludes the optical combiners CB in Fig. 4. The Fig. 5 is discussed in as far as it differs from Fig. 4. Compared to Fig. 4 further details are provided. First of all, the figure now includes reference signs for the (single) optical input INP and the plurality of optical outputs OUTP-1..OUTP-Y. The figure also illustrates that the optical splitter SPL has a number Y of outputs equal to the number of optical outputs OUTP-1..OUTP-Y of the wavelength selection block WSB. In Fig. 4 these numbers are equal. However, that does not need to be the case.

Furthermore, compared to Fig. 4, the configuration of the wavelength selection block WSB is presented in a more generalized form, i.e. it may be applied to a different number K of individual wavelength optical signals in the multi-wavelength optical signal and a different number Y of optical outputs λ1..λK per wavelength selection block WSB, including embodiments where these numbers K,Y are different from each other. In case these numbers are different the number of different wavelengths K is larger than the number of outputs Y. If K were smaller than Y this would imply not all hardware is being used and thus an inefficient solution. Fig. 5 illustrates the outputs of each semiconductor optical amplifier SOA as a gated individual wavelength signal λ1g..λKg and the output of the (multiplexing) arrayed waveguide grating AWG as a gated multi-wavelength signal λAg. The latter does not mean that in each gated multi-wavelength signal λAg all wavelengths are present as a selection of those wavelengths may have been gated by the respective amplifiers SOA. The control module CM control the amplifiers SOA is also illustrated in Fig. 5.

Fig. 6 shows an optical distribution block PDB comprising a plurality N of wavelength selection blocks WSB as shown in Fig. 5. The optical distribution block PDB has a first set Si1 of optical input terminals Ti1, Ti2, Ti3..TiN, each input terminal being connected with a respective optical input of a respective wavelength selection block WSB, as illustrated. Furthermore, the optical distribution block PDB has a second set So2 of optical output terminals, each output terminal being connected with a respective output of a respective wavelength selection block WSB, as illustrated. These outputs are grouped, wherein each output OUTP maybe coupled with a respective input of a respective switch OCS1, OCS2, OCS3, EPS, as illustrateed. It is further shown in Fig. 6 that the number of optical output terminals So2 equals the plurality N of wavelengths selection blocks WSB times the number Y of outputs on each wavelength selection block WSB. This leads to a 1 :Y-ratio as illustrated in the figure.

When focusing on integration of Figs. 5 and 6 using the current capabilities of InP (Indium Phosphide) foundries, for example, the solution faces significant production challenges. Specifically, it requires a large number of AWGs (Arrayed Waveguide Gratings), which are difficult to design within a photonic integrated circuit (PIC). Additionally, AWGs are relatively large compared to other components and have low production yield. These factors make the large-scale production of this solution particularly challenging.

One primary limitation is the granularity of control. While current ROADMs excel in rerouting wavelengths, they lack the ability to amplify these wavelengths individually within the same module. This necessitates separate amplification systems, leading to increased complexity and potential signal degradation, as each additional component in the signal path can introduce loss and noise.

Another issue is the fixed nature of the optical paths within some ROADM designs. Once a path is established, modifying it to adapt to rapidly changing network conditions can be challenging. This rigidity contrasts with the dynamic nature of network traffic, which requires a more agile and responsive system.

In terms of power management, traditional ROADMs do not inherently optimize for signal power uniformity across different channels. This can lead to some wavelengths being transmitted with higher power than others, necessitating intricate balancing to avoid performance issues like crosstalk and signal distortion, especially over long distances.

Fig. 7 shows a generic embodiment of wavelength selection block WSB-2 in accordance with the invention. The wavelength selection block WSB-2 has an optical input INP that is to be connected with a respective one of the earlier-mentioned optical input terminals Ti1..TiN when used in an optical distribution block PDB-2 as, for instance, To1 shows. each wavelength selection block WSB-2 comprises four consecutive stage S1, S2, S3, S4 as illustrated. The optical input INP carries a multi-wavelength optical signal λA in an optical fibre 1, which is coupled into a first stage S1 of the block as illustrated.

A key feature of the current invention is that the first stage S1 comprises a wavelength splitter WLS, which may be an arrayed waveguide grating AWG, but it may also be a multi-mode interference (MMI) in certain embodiments, particularly when the number of wavelengths is limited. Thus, the first stage S1 performs a demultiplexing of the multi-wavelength optical signal λA in the optical fibre 1 into a first number K of individual wavelength signals λ1.. λK on its wavelength outputs 2.

A second stage S2 connected with the first stage S1 comprises a same number K of optical splitters SPL-1..SPL-K, each optical splitter SPL-1..SPL-K having a single splitter input 3 connected with a respective wavelength output 2, as illustrated. Each splitter SPL-1..SPL-K has a second number Y of splitter outputs 4, wherein each splitter output 4 carries a respective copy of the respective individual wavelength signal λ1.. λK on its splitter input 3.

A third stage S3 connected with the second stage S2 comprises a third number KxY of optical gates GA-11, GA1-Y..GA-K1, GA-KY, wherein the third number KxY is the first number K multiplied by the second number Y. Each optical gate GA-11, GA1-Y..GA-K1, GA-KY comprises a respective gate input 5 and a respective gate output 6 and is cable of blocking and passing on its respective individual wavelength optical signal on its gate input 5. In an embodiment these optical gates are semiconductor optical amplifiers, but in alternative embodiments this may be alternative amplification devices. The optical gates GA-11, GA1-Y..GA-K1, GA-KY main function is to gate the signals, but in further embodiments may also be used to (re)amplify the optical signals in order to compensate for losses and obtain an equalized signal strength at all outputs. In the third stage S3 the optical gates are grouped in K groups GR-1..GR-K as illustrated, one group per optical splitter SPL-1..SPL-K. Each optical gate GA-11, GA1-Y..GA-K1, GA-KY generates, controlled by the earlier-mentioned control module CM, on its respective gate output 6, a respective gated individual wavelength signal λ1g.. λKg of its respective input optical signal λ1.. λK on its respective gate input 5.

A fourth stage S4 connected with the third stage S3 comprises a further plurality of optical combiners CB-1..CB-Y, wherein the further plurality in this embodiment equals the second number Y. Each optical combiner CB-1..CB-Y has a plurality of combiner inputs 7, one for each gated wavelength optical signal λ1g.. λKg and generates on its respective (single) combiner output 8 a respective multiplexed multi-wavelength optical signal λAg, which is coupled to the output terminal OUTP-1..OUTP-K as illustrated.

All the connections to and from inputs and outputs 1, 2, 3, 4, 5, 6, 7, 8 are optical fibres or optical waveguides.

It must be noted that a major difference between Fig. 5 and Fig. 7 is that in Fig. 7 there are crossings in the optical paths between the third stage S3 and the fourth stage S4, which are not present in Fig. 5.

The individual components of Fig. 7 are discussed in more detail below.

Wavelength splitter WLS / Arrayed Waveguide Grating (AWG): This component serves as a critical junction, i.e., it acts as a spectral prism, demultiplexing the incoming signal into its constituent wavelengths (λ1 through λN). This component is the heart of the system that organizes the chaotic multitude of wavelengths into orderly, separate channels.

Optical splitters SPL-1..SPL-K: These components are positioned after the wavelength splitter WLS. The optical splitters are tasked with dividing each demultiplexed wavelength into multiple individual paths, expanding the network's capability to handle numerous parallel processing streams.

Optical gates GA-11, GA1Y..GA-K1, GA-KY / Semiconductor Optical Amplifiers (SOA): These components are strategically placed along the paths of each specific wavelength channel. These gates/SOAs may amplify the optical signals to compensate for any losses incurred during transmission, ensuring that each wavelength is at an optimal power level for its subsequent journey. The optical gates are preferably Narrow Band SOAs, which are designed to selectively amplify narrow bands within the broader wavelength channels. Such precision suggests a fine-tuned approach to managing signal strength and quality across a multitude of channels. It is important to notice the fact that narrow band SOA may be used, while this is not strictly necessary it makes the solution more appealing due to the simplified design and production of narrow band SOA compared to wide band SOA. This aspect allows integration in a single photonic IC (PIC) for example in a InP-solution which is not possible when using wide band SOA.

Combiners CB-1..CB-Y: These components act as converging points, merging the individually processed channels back into unified outputs. This allows for a composite signal to be tailored and directed towards specific destinations within the network.

Fig. 8 shows an optical distribution block PDB-2 comprising a plurality of wavelength selection blocks WSB-2 as shown in Fig. 7. The figure will be mainly discussed in as far as it differs from Fig. 6. The structures are similar, as the main differences are at the level of the wavelength selection blocks WSB-2 as discussed with reference to Fig. 7. On distribution block level the circuit functions the similar as Fig. 6. There is shown a plurality P1b of wavelength selection blocks WSB-2, said plurality P1b equalling the earlier mentioned number N in Fig. 6. Similarly, there is shown a plurality P2o of optical outputs OUTP per wavelength selection block WSB-2, said plurality P2o equalling the earlier mentioned number Y in Fig. 6. The optical output terminals are grouped and for the first group the individual output terminals To1a, To1b, To1c, Told are indicated, while for the other groups individual reference signs To2, To3, To4 are shown. As also illustrated in Fig. 3, the first output terminal To1a of each group is coupled with a first switch module being the first optical circuit switch OCS1 in this embodiment. The second output terminal To2b of each group is coupled with a second switch module being the second optical circuit switch OCS2 in this embodiment. The third output terminal To3c of each group is coupled with a third switch module being the third optical circuit switch OCS3 in this embodiment. The fourth output terminal To2d of each group is coupled with a fourth switch module being the electronic packets switch EPS in this embodiment. The optical circuit switches OCS1, OCS2, OCS3 and the electronic packet switch EPS together are also referred to as the switching matrix module SMM and are all part of the smart data switch SSW of Fig. 3. Each optical circuit switch OCS1, OCS2, OCS3 and the electronic packet switch EPS are also being referred to as switching matrix.

One purpose of the proposed invention in Figs. 7 and 8, which integrates Semiconductor Optical Amplifiers (SOAs) with optical distribution block, is to surmount the limitations of current Reconfigurable Optical Add-Drop Multiplexers (ROADMs) concerning fault recovery and control granularity.

Today's ROADM technology, while flexible, often struggles with rapid and granular fault recovery. In the event of a fault, traditional ROADMs may experience delays as they reconfigure the optical path, which can disrupt service and lead to data transmission errors. The invention aims to address this by providing a more responsive system that can swiftly adjust and recover from faults, minimizing service interruption and maintaining network integrity.

The use of amplifying optical gates/SOAs offers a novel approach to signal amplification and routing by allowing for individual wavelength manipulation directly within the switching mechanism. Unlike current systems, where amplification is typically a separate process after the add-drop function, the invention can amplify specific wavelengths as needed without external components. This not only simplifies the overall design but also enhances signal integrity by reducing points of potential loss or distortion.

In terms of granularity, the invention promises a level of precision in wavelength control that is a significant leap forward from current ROADM capabilities. With the ability to individually amplify and route wavelengths, network operators can fine-tune the power levels and destinations of each wavelength with exceptional detail. This granularity ensures that network resources are used efficiently and that wavelength channels can be balanced uniformly, mitigating issues such as crosstalk and ensuring optimal performance across the network.

The inventive approach also allows for the simultaneous distribution of a single wavelength to multiple outputs or the merging of multiple wavelengths into a single output. This flexibility is not typically inherent in conventional ROADMs and could significantly enhance network customization, allowing for innovative network topologies tailored to specific service requirements.

The invention in question is an intricately designed optical switch that employs an array of Semiconductor Optical Amplifiers (SOAs) - or alternative optical amplifying gates - to manage light channels with high precision within Wavelength Division Multiplexing (WDM) networks.

The purpose of the invention is achieved in the following ways:
1) Innovative Light Channel Processing: Utilizing Arrayed Waveguide Grating (AWG) (MMI can be used for a small number of wavelengths), the invention adeptly separates incoming optical signals into individual wavelengths. This initial stage sets the groundwork for the intricate manipulation of data channels that follows. It is important to notice that in the current invention only one AWG is required increasing the producibility considerably.
2) Tailored Wavelength Management: At the core of the invention lies a matrix of SOAs, each responsible for the independent handling of specific wavelength channels. By adjusting these SOAs, each light channel can be independently directed to its designated output, thus enabling a dynamic network response to changing data demands or network conditions.
3) Versatile Channel Configuration: The device is capable of merging multiple wavelengths into a unified output or, conversely, splitting a single wavelength to disseminate across various outputs. This duality of function embodies the invention's versatility, meeting a wide array of network configurations and user demands.
4) Enhanced Signal Integrity: Through the optical gates (SOAs), the invention not only routes but may, in advantageous embodiments, also amplify each light channel, ensuring that the signal maintains its integrity and strength over long distances or through segments of the network that might traditionally experience signal degradation.
5) Rapid Fault Recovery: With its capacity for independent wavelength control, the system provides swift and effective fault recovery. It can reconfigure and reroute affected light paths almost instantaneously (ns), thus upholding network performance and minimizing service interruptions.
6) Precision Control: The invention allows network operators to fine-tune the signal on a per-wavelength basis, which is a substantial enhancement over the broader stroke adjustments offered by conventional ROADMs.
7) Improved durability: This invention provides optimal thermal behaviour due to the SoAs being used in mutual exclusion. This positively impacts both the durability and lifetime of the recombiner, as better thermal management leads to less wear on components and improved overall performance.

In the invention multiple optical modules outputs (wavelength selection block outputs) need to be combined to add wavelengths from different inputs. The invention also requires combining outputs of multiple optical modules, following the same design as the example in the literature.

It is important to note that the wavelength selection block and the optical distribution block of the invention may be used in both directions, which is both in a demultiplexing and multiplexing mode. This reversed way of using these devices would render the inputs to be outputs and the outputs to be inputs.

In a large data network operation, the optical distribution block of the invention is employed to manage a crucial link between a central office and multiple endpoints, such as local exchanges or company branch offices.

Referring to Fig. 7, the invention may be used as follows:
1. Input Signal Reception: A multiplexed optical signal containing multiple wavelengths (λ1 through λN) enters the system/device.
2. Wavelength Demultiplexing: The wavelength splitter/AWG SPL-1..SPLK-K demultiplexes the input signal, separating it into individual wavelengths.
3. Signal Routing: Each wavelength is directed through a splitter SPL-1, SPL-K, which creates copies of the signal for routing to different endpoints.
4. SOA Gating: The SOAs GA-11, GA-1Y..GA-K1, GA-KY function as gates, determining which pathways are allowed to pass signals through. For example, during routine operations, SOA λ1 may permit λ1 to pass to Output 1 but block it from Outputs 2 through Y. While gating the signal may get amplified to the requested level by the network operator.
5. Dynamic Path Configuration: In case of a failure at one of the endpoints or a need for rerouting due to maintenance, the system can dynamically reconfigure which paths are active. If the endpoint connected to Output 1 is down, SOA λ1 can be switched off for that path, and an alternate SOA corresponding to λ1 can be activated to route the signal to a different output.
6. Signal Recombining: If certain endpoints need to receive signals from multiple wavelengths, the optical combiners CB-1..CB-Y merges (passively) these different wavelengths into a single output after they have passed through their respective SOAs.
7. Output Delivery: The recombined and routed wavelengths are then delivered to their respective outputs. For instance, Output 1 might feed into a local exchange serving residential customers, while Output Y might be dedicated to a business customer requiring higher bandwidth.

By using SOAs as gates, the system can quickly adapt to network changes, redirecting traffic to maintain service continuity.

Certain components within the system offer the flexibility to be substituted with alternative parts that fulfil the same role, depending on specific network requirements or constraints:
The Arrayed Waveguide Grating (AWG) can be interchanged with a Multimode Interference (MMI) device in scenarios where the wavelength count is modest and does not necessitate the AWG's full capacity. An MMI can provide a more cost-effective and simpler solution in such situations.

As for the Narrow Band Semiconductor Optical Amplifiers (SOAs), they can be swapped with alternative amplification devices. Depending on the required amplification spectrum and power, wide or narrow band amplifiers can be employed to ensure appropriate signal boosting.

Moreover, the splitters and combiners in the system are available in various forms and may be selected based on the manufacturing technology of the components or the specific design requirements of the network. The choice of splitter or combiner can be tailored to optimize performance, integration with other components, or cost-efficiency within the network's architecture.

The particular embodiments disclosed above are illustrative only, as the invention may be modified and practiced in different but equivalent manners apparent to those skilled in the art having the benefit of the teachings herein. For example, many of the circuit types mentioned have thousands of implementations for carrying out the same function. The invention covers all these variants as long as they are covered by the independent claim. No limitations are intended to the details of construction or design herein shown, other than as described in the claims below. It is therefore evident that the particular embodiments disclosed above may be altered or modified and all such variations are considered within the scope of the invention. Accordingly, the protection sought herein is as set forth in the claims below.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise", and its conjugations does not exclude the presence of elements or steps other than those stated in a claim. The article "a" or "an" preceding an element does not exclude the presence of a plurality of such elements. The mere fact that certain measures are recited in mutually different dependent claims does not indicate that a combination of these measures cannot be used to advantage. In the device claims enumerating several means, several of these means may be embodied by one and the same item of hardware.

## Claims

1. A wavelength selection block (WSB-2) for a multi-port optical distribution block (PDB-2), the wavelength selection block (WSB-2) comprising:
- an optical input (INP) for receiving an optical fibre (1) carrying a multi-wavelength optical signal (λA) comprising a first number (K) of individual wavelength optical signals (λ1..λK) multiplexed in the optical fibre (1) in operational use; and
- a second number (Y) of optical outputs (OUTP-1..OUTP-Y), the second number (P20, Y) defining a multiplication factor (Y);
wherein, the wavelength selection block (WSB-2) comprises four consecutive stages (S1..S4) between the optical input (INP) and the second number (P2o, Y) of optical outputs (OUTP-1..OUTP-Y),
wherein a first stage (S1) of the four consecutive stages (S1..S4) is directly coupled with the optical input (INP) and comprises wavelength splitter (WLS) having multiple wavelength outputs (2), the wavelength splitter (WLS) being configured for splitting the multi-wavelength optical signal (λA) on the optical input (INP) into consecutive individual wavelength optical signals (λ1..λK) distributed over the wavelength outputs (2),
wherein a second stage (S2) of the four consecutive stages (S1..S4) is coupled with the wavelength outputs (2) of the wavelength splitter (WLS) and comprises one optical splitter (SPL-1..SPL-K) per wavelength output (2), each optical splitter (SPL-1..SPL-K) having a splitter input (3) and a plurality of splitter outputs (4), each consecutive splitter (SPL-1..SPL-K) creating a consecutive group (GR-1..GR-K) of copies of each respective individual wavelength optical signal (λ1..λK) on its respective plurality of splitter outputs (4), a number of splitter outputs (4) per optical splitter (SPL-1..SPL-K) equalling the multiplication factor (Y),
wherein a third stage (S3) of the four consecutive stages (S1..S4) is coupled with the splitter outputs (4) of the second stage (S2) and comprises a third number (KxY) of optical gates (GA-11, GA-1Y, GA-K1, GA-KY) having a gate input (5) and a gate output (6), the third number (KxY) being the first number (K) multiplied by the second number (Y), wherein each copy of each consecutive group (GR-1..GR-K) of copies is individually gated by a respective optical gate (GA-11, GA-1Y, GA-K1, GA-KY) that is configured for selectively passing or blocking the respective individual wavelength optical signal (λ1..λK) on the respective gate input (5) so as to obtain a respective gated individual wavelength optical signal (λ1g..λKg) on the respective gate output (6),
wherein a fourth stage (S4) of the four consecutive stages (S1..S4) is coupled with the gate outputs (6) of the optical gates (GA-11, GA-1Y, GA-K1, GA-KY) of the third stage (S3) and comprises a further plurality (Y) of optical combiners (CB-1..CB-K), each optical combiner (CB-1..CB-K) having a number of optical combiner inputs (7) equal to the first number (K) and one optical combiner output (8), wherein each consecutive optical combiner input (7) of each consecutive optical combiner (CB-1..CB-K) receives a consecutive gated individual wavelength optical signal (λ1g..λKg) from each consecutive group (GR-1..GR-K) so as to obtain a respective gated multi-wavelength optical signal (vAg) on each optical combiner output (8),
wherein each optical combiner outputs (8) is coupled with a respective optical output (OUTP-1..OUTP-Y).

2. The wavelength selection block (WSB-2) according to claim 1, wherein each optical gate (GA-11, GA-1Y, GA-K1, GA-KY) is further configured for performing amplification of the respective gated individual wavelength optical signal (λ1g..λKg).

3. The wavelength selection block (WSB-2) according to claim 1 or 2, wherein the first number (K) is equal to the second number (Y), which implies the number of optical outputs (OUTP-1..OUTP.Y) being equal to the number of individual wavelength optical signals (λ1..λK) in multi-wavelength optical signal (λ1..λK) on the optical input (INP) in operational use.

4. The wavelength selection block (WSB-2) according to claim 1 or 2, wherein the first number (K) is larger than the second number (Y), which implies the number of optical outputs (OUTP-1..OUTP.Y) being smaller than the number of individual wavelength optical signals (λ1..λK) in the multi-wavelength optical signal (λA) on the optical input (INP) in operational use.

5. An optical distribution block (PDB-2) comprising a further number (N) of wavelength selection blocks (WSB-2) according to any one of claims 1 to 4, wherein each optical input (INP) is coupled with a respective optical input line (Ti1, Ti2, Ti3, Ti4) of the optical distribution block (PDB-2), and wherein each optical output (OUTP) is coupled with a respective optical output line (To1a, To1b, To1c, To1d, To2, To3, To4) of the optical distribution block (PDB-2).

6. The optical distribution block (PDB-2) according to claim 5, wherein the first number (K) of wavelength outputs (2) of the wavelength splitter equals the number of optical splitters (SPL-1..SPL-k), which equals the number of groups (GR-1..GR-k) of copies, which equals the number of combiner inputs (7), wherein the first number (K) is an integer larger than or equal to two.

7. The optical distribution block (PDB-2) according to claim 5 and 6, wherein the second number (Y) of optical outputs (OUTP) of the wavelength selection block (WSB-2) equals the number of splitter outputs (4), which equals the number of copies in each group, which equals the number of optical combiners (CB-1..CB-Y), wherein the second number (Y) is an integer larger than or equal to two.

8. The optical distribution block (PDB-2) according to claim 5, 6 or 7, wherein the further number (N) of wavelength selection blocks (WSB-2) in the optical distribution block (PDB-2) equals the number of switches (OCS1, OCS2, OCS3, EPS) in the smart switch (SSW), wherein the further number is an integer larger than or equal to two.

9. Smart data switch (SSW) comprising a plurality of switches (OCS1, OCS2, OCS3, EPS), and two optical distribution blocks (PDB1, PDB2, PDB-2) according to any one of claims 5 to 8, wherein the first optical distribution block (PDB1, PDB-2) is placed on an input side of the smart data switch (SSW) for demultiplexing incoming multi-wavelength signals on a plurality of its inputs (xNi) into demultiplexed signals on its outputs (xN) for being sent to the plurality of switches (OCS1, OCS2, OCS3, EPS), wherein the second optical distribution block (PDB2, PDB-2) is placed on an output side of the smart data switch (SSW) for multiplexing demultiplexed signals on its inputs (xN) that are received from the plurality of switches (OCS, OCS2, OCS, EPS) into multiplexed multi-wavelength signals on its outputs (xNo).

10. Optical data network (10-1) comprising a plurality of data network nodes (N1-1, N2-1, N3-1, N4-1, NN-1) and smart data switch (SSW) according to claim 9, the smart data switch (SSW) connecting these data network nodes (N1-1, N2-1, N3-1, N4-1, NN-1) and allowing data communication there between.

11. A wavelength selection block (WSB-2) for a multi-port optical distribution block (PDB-2), the wavelength selection block (WSB-2) comprising:
- an optical input (INP) for receiving an optical fibre (1) carrying a multi-wavelength optical signal (λA) comprising a first number (K) of individual wavelength optical signals (λ1..λK) multiplexed in the optical fibre (1) in operational use; and
- a second number (Y) of optical outputs (OUTP-1..OUTP-Y), the second number (P20, Y) defining a multiplication factor (Y);
wherein, the wavelength selection block (WSB-2) comprises four consecutive stages (S1..S4) between the optical input (INP) and the second number (P2o, Y) of optical outputs (OUTP-1..OUTP-Y),
wherein in a first stage the multi-wavelength optical signal (λA) is split into consecutive individual wavelength optical signals (λ1..λK),
wherein in a second stage (S2) each individual wavelength optical signal (λ1..λK) is split into a respective group (GR-1..GR-K) of copies of the respective individual wavelength optical signal (λ1..λK), the number of copies equalling the multiplication factor (Y),
wherein in a third stage (S3) each copy of each consecutive group (GR-1..GR-K) of copies is individually gated for selectively passing or blocking the respective individual wavelength optical signal (λ1..λK) so as to obtain a respective gated individual wavelength optical signal (λ1g..λKg),
wherein in a fourth stage (S4) each consecutive gated individual wavelength optical signal (λ1g..λKg) from each consecutive group (GR-1..GR-K) is combined so as to obtain a respective gated multi-wavelength optical signal (λAg),
wherein each (8) respective gated multi-wavelength optical signal (λAg) is coupled with a respective optical output (OUTP-1..OUTP-Y).
